# EUROPÄISCHE PATENTSCHRIFT

(11) **EP 3 795 914 B1**
(45) Veröffentlichungstag und Bekanntmachung des Hinweises auf die Patenterteilung: **09.10.2024**
(21) Anmeldenummer: 20197127.2
(22) Anmeldetag: 21.09.2020
(51) Int. Cl.: F24F 11/00, F24F 3/044, F24F 11/72, F24F 110/20, F24F 110/70, F24F 11/875, F24F 110/40, F24F 12/00

(54) **MEHRRAUMGEBÄUDE-LÜFTUNGSANLAGE**
MULTI-ROOM BUILDING VENTILATION SYSTEM
INSTALLATION D'AÉRATION D'UN BÂTIMENT AYANT PLUSIEURES PIÈCES

(30) Priorität: 23.09.2019 DE 102019125523
(43) Veröffentlichungstag der Anmeldung: 24.03.2021
(73) Patentinhaber: Viessmann Climate Solutions SE, 35108 Allendorf (DE)
(72) Erfinder: Dickel, Marcel, 57319 Bad Berleburg (DE); Kröger, Jan-Heiner, 21339 Lüneburg (DE)
(74) Vertreter: Wolf, Michael

(56) Entgegenhaltungen:
- EP-A1- 0 438 037
- EP-A1- 0 767 386
- EP-A1- 3 534 079
- EP-A2- 1 832 818
- DE-U1- 202006 014 378

## Beschreibung

Die Erfindung betrifft eine Mehrraumgebäude-Lüftungsanlage gemäß dem Oberbegriff des Patentanspruchs 1.

Eine Mehrraumgebäude-Lüftungsanlage der eingangs genannten Art ist aus dem Dokument US 2017/0336094 A1 bekannt. Diese besteht aus einem mehrräumigen Gebäude und einem in diesem angeordneten, zentralen Lüftungsgerät, das mit einer Umgebung des Gebäudes verbundene Luftzu- und Luftabfuhranschlüsse aufweist, wobei im Gebäude mindestens ein vom Lüftungsgerät mit Zuluft versorgt ausgebildeter Raum und mindestens ein vom Lüftungsgerät von Abluft befreit ausgebildeter Raum vorgesehen ist. Diese Anlage, die mit entsprechenden Sensoren versehen ist, dient dazu, die Belüftung jedes einzelnen Raums am Bedarf orientiert zu gewährleisten.

Der Erfindung liegt die Aufgabe zugrunde, eine Mehrraumgebäude-Lüftungsanlage der eingangs genannten Art zu verbessern. Insbesondere soll eine hinsichtlich ihres Energieverbrauchs bei der bedarfsgeführten Einzelraumregelung verbesserte Lüftungsanlage geschaffen werden.

Diese Aufgabe ist mit einer Mehrraumgebäude-Lüftungsanlage der eingangs genannten Art durch die im Kennzeichen des Patentanspruchs 1 aufgeführten Merkmale gelöst.

Nach der Erfindung ist also vorgesehen, dass zwischen den Räumen ein Verbindungsraum, im Verbindungsraum ein von den Luftzu- und Luftabfuhranschlüssen unabhängiger, mit der Umgebung des Gebäudes verbundener Ausgleichsanschluss und ein einerseits mit dem Verbindungsraum und andererseits mit dem Ausgleichsanschluss verbundener Wärmespeicher vorgesehen ist.

Mit anderen Worten zeichnet sich die erfindungsgemäße Lösung somit dadurch aus, dass Luft über den Ausgleichsanschluss dem Gebäude zu- bzw. vom Gebäude abgeführt werden kann. Bei Abführung aus dem Gebäude wird dabei in der Luft vorhandene Wärme dem Wärmespeicher zugeführt. Bei Zuführung von Luft in das Gebäude wird dagegen (bei Bedarf) im Wärmespeicher gespeicherter Wärme an die zugeführte Luft abgegeben. Da auf diese Weise eine unnötige Abgabe von Wärme an die Umgebung vermieden wird, ist diese Maßgabe energetisch vorteilhaft, wobei insgesamt betrachtet aufgrund minimierter, durch die Anlage zu fördernder Luftvolumenströme der Energieverbrauch des Lüftungsgeräts und eben auch die Lüftungswärmeverluste reduziert werden können. Darüber hinaus werden bei der erfindungsgemäßen Lösung aber auch noch Verbesserungen hinsichtlich des Komforts erreicht, nämlich eine geringere Lärmbelästigung, weniger Zugluft und eine bedarfsgerechte(re) Lüftung.

Andere vorteilhafte Weiterbildungen der erfindungsgemäßen Mehrraumgebäude-Lüftungsanlage ergeben sich aus den abhängigen Patentansprüchen.

Der Vollständigkeit halber wird noch auf folgende Patentdokumente hingewiesen: EP 1 832 818 A2, EP 0 438 037 A1, EP 3 534 079 A1, DE 20 2006 014 378 U1 und EP 0 767 386 A1.

Die erfindungsgemäße Mehrraumgebäude-Lüftungsanlage einschließlich ihrer vorteilhaften Weiterbildungen gemäß der abhängigen Patentansprüche wird nachfolgend anhand der zeichnerischen Darstellung eines bevorzugten Ausführungsbeispiels näher erläutert.

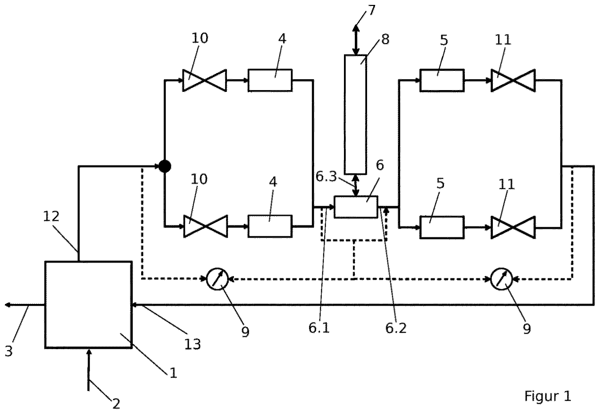

Es zeigt schematisch
- Figur 1: die erfindungsgemäße Mehrraumgebäude-Lüftungsanlage mit insgesamt fünf Räumen.

Die in der einzigen Figur dargestellte Mehrraumgebäude-Lüftungsanlage besteht zunächst in bekannter Weise aus einem mehrräumigen Gebäude und einem in diesem angeordneten, zentralen Lüftungsgerät 1, das mit einer Umgebung des Gebäudes verbundene Luftzu- und Luftabfuhranschlüsse 2, 3 aufweist, wobei im Gebäude mindestens ein vom Lüftungsgerät 1 mit Zuluft versorgt ausgebildeter Raum 4 und mindestens ein vom Lüftungsgerät 1 von Abluft befreit ausgebildeter Raum 5 vorgesehen ist.

Dabei sind wahlweise, wie dargestellt, bevorzugt mehrere Räume 4 parallel mit Zuluft versorgt und/oder mehrere Räume 5 parallel von Abluft befreit ausgebildet.

Weiterhin ist bevorzugt vorgesehen, dass der Luftzufuhranschluss 2 als Außenluftanschluss und der Luftabfuhranschluss 3 als Fortluftanschluss ausgebildet ist. Ferner ist am Lüftungsgerät 1 ein mit dem mit Zuluft versorgt ausgebildeten Raum 4 verbundener Zuluftanschluss 12 und ein mit dem von Abluft befreit ausgebildeten Raum 5 verbundener Abluftanschluss 13 vorgesehen.

Die Begriffe Außenluftanschluss, Fortluftanschluss, Zuluftanschluss und Abluftanschluss werden dabei wie in der Sanitär-Heizungs- und Klimatechnik-Branche derzeit üblich verwendet. Wesentlich für die erfindungsgemäße Mehrraumgebäude-Lüftungsanlage ist nun, dass zwischen den Räumen 4, 5 ein Verbindungsraum 6, im Verbindungsraum 6 ein von den Luftzu- und Luftabfuhranschlüssen 2, 3 unabhängiger, mit der Umgebung des Gebäudes verbundener Ausgleichsanschluss 7 und ein einerseits mit dem Verbindungsraum 6 und andererseits mit dem Ausgleichsanschluss 7 verbundener Wärmespeicher 8 vorgesehen ist. Die Maßgabe "zwischen" bedeutet dabei, dass der Verbindungsraum 6 orientiert an der Luftströmung zwischen dem Luftzufuhranschluss 2 und der Luftabfuhr 3 angeordnet ist.

Besonders bevorzugt ist dabei im Wärmespeicher 8 ein Phasenwechselmaterial, vorzugsweise Paraffin, zur Speicherung von Wärme vorgesehen. Besonders bevorzugt ist dabei vorgesehen, dass temperaturorientiert gestaffelte Schichten von Paraffinen mit unterschiedlichen Schmelztemperaturen vorgesehen sind, wobei eine Paraffinschicht mit niedrigerer Schmelztemperatur auf Seiten des Ausgleichsanschluss 7 und eine Paraffinschicht mit höherer Schmelztemperatur auf Seiten des Verbindungsraum-Ausgleichsanschluss 6.3 angeordnet ist.

Wie aus Figur 1 ersichtlich, ist dabei besonders bevorzugt vorgesehen, dass wahlweise der Verbindungsraum 6 mit von den mit Zuluft versorgten Räumen 4 kommender Luft parallel versorgt und/oder mit von den von Abluft befreiten Räumen 5 strömender Luft parallel befreit ausgebildet ist.

Weiterhin ist besonders bevorzugt vorgesehen, dass der Verbindungsraum 6 einen gemeinsamen Verbindungsraum-Zufuhranschluss 6.1 zur Verbindung mit den mit Zuluft versorgten Räumen 4, einen gemeinsamen Verbindungsraum-Abfuhranschluss 6.2 zur Verbindung mit den von Abluft befreiten Räumen 5 und einen Verbindungsraum-Ausgleichsanschluss 6.3 zur Verbindung mit dem Wärmespeicher 8 aufweist. Alternativ (nicht extra dargestellt) kann aber auch vorgesehen sein, dass die Räume 4, 5 zum Beispiel über Überströmöffnungen direkt mit dem Verbindungsraum 6 verbunden sind.

Zur genauen Regelung der erfindungsgemäßen Lüftungsanlage ist ferner besonders bevorzugt vorgesehen, dass den Räumen 4, 5, 6 zur Ermittlung einer sich von einer Zuluftöffnung zu einer Abluftöffnung einstellenden Druckdifferenz Drucksensoren 9 zugeordnet sind. Noch etwas genauer betrachtet, ist dabei besonders bevorzugt ein erster Drucksensor 9 zwischen einer gemeinsamen, den Räumen 4 vorgeschalteten Zuluftöffnung und dem Verbindungsraum 6 und ein zweiter Drucksensor 9 zwischen dem Verbindungsraum 6 und einer gemeinsamen, den Räumen 5 nachgeschalteten Abluftöffnung angeordnet.

Weiterhin ist wahl- und vorzugsweise dem mit Zuluft versorgt ausgebildeten Raum 4 ein Zuluftventil 10 vorgeschaltet und/ oder dem von Abluft befreit ausgebildeten Raum 5 ein Abluftventil 11 nachgeschaltet. Die Funktion dieser Ventile wird weiter unten noch genau erläutert.

Bezüglich des Betriebs der erfindungsgemäßen Lüftungsanlage ist weiterhin besonders bevorzugt vorgesehen, dass wahlweise bei einer Luftabfuhr über den Ausgleichsanschluss 7 gegebenenfalls in der Abfuhrluft enthaltene Wärme an den Wärmespeicher 8 oder bei einer Luftzufuhr über den Ausgleichsanschluss 7 gegebenenfalls im Wärmespeicher 8 gespeicherte Wärme an die Zufuhrluft übertragen wird.

Ferner ist bevorzugt vorgesehen, dass mit Hilfe von den in den Räumen 4, 5, 6 angeordneten Drucksensoren 9 und mit Hilfe von den Räumen 4, 5 zugeordneten Zuluft- und Abluftventilen 10, 11 konstante Differenzdrücke in den Räumen 4, 5, 6 eingeregelt werden. Anders ausgedrückt, übernehmen letztlich die Ventilatoren des Lüftungsgeräts 1 die Luftdruckregelung, und zwar in der Form, dass sie dafür sorgen, dass die mit Hilfe der Drucksensoren 9 ermittelten Druckdifferenzen unabhängig von Ventilstellungen auf einen festzulegenden Wert konstant gehalten werden. Die Luftvolumenströme sind variabel und folgen den Bedarfen in den Räumen 4, 5. Aus der Veränderung der Rohrleitungswiderstände mit Hilfe der Zu- und Abluftventile 10, 11 und dem Konstanthalten der Differenzdrücke resultiert der gewünschte Luftvolumenstrom, der durch die Ventilatoren erzeugt wird, wobei gilt: Druckdifferenz = Volumenstrom² * Rohrleitungswiderstände.

Weiterhin sind wahl- und vorzugsweise in den Räumen 4, 5, 6 nicht extra in Figur 1 dargestellte Kohlendioxidsensoren und/ oder Feuchtigkeitssensoren angeordnet, wobei in diesem Fall ferner besonders bevorzugt ist, dass wahlweise mit Hilfe von (den genannten) Kohlendioxidsensoren und/oder (den genannten) Feuchtigkeitssensoren in den Räumen 4, 5, 6 ein Belüftungsbedarf (zum Beispiel wegen zu hoher Luftfeuchtigkeit) ermittelt und dessen Befriedigung mit Hilfe einer bedarfsangepassten Einstellung der Zuluft- 10 und Abluftventile 11 geschaffen wird, was somit letztlich durch eine Änderung des Rohrleitungswiderstandes realisiert wird.

Darüber hinaus ist besonders bevorzugt vorgesehen, dass eine Einstellung der Zuluft- 10 und Abluftventile 11 bedarfsorientiert am Zustand des Wärmespeichers 8 erfolgt, wobei der Zustand des Wärmespeichers 8 vorzugsweise mit Hilfe geeigneter Sensoren, zum Beispiel Sensoren zur Erfassung der Lufttemperatur, ermittelt wird. Auch in diesem Fall erfolgt die Einstellung somit letztlich über eine Änderung des Rohrleitungswiderstandes, wobei die am Wärmespeicher 8 orientierte Regelung selbstverständlich dann besonders wichtig ist, wenn im Wärmespeicher keine Wärme gespeichert ist, damit zum Beispiel über den Ausgleichsanschluss 7 keine kalte Luft in das Gebäude eingebracht wird. Dabei kann, was nicht extra dargestellt ist, zwischen dem Verbindungsraum 6 und dem Ausgleichsanschluss 7 auch noch ein zusätzliches Ventil zur Regelung der Zu- und Abströmung der Luft über den Ausgleichsanschluss 7 vorgesehen sein.

Schließlich ist noch besonders bevorzugt vorgesehen, dass dem Verbindungsraum 6 bei Bedarf wahlweise mehr oder weniger Luft vom mit Zuluft versorgt ausgebildeten Raum 4 zugeführt als vom von Abluft befreit ausgebildeten Raum 5 abgeführt wird.

Orientiert an den obigen Merkmalen, die nicht alle zwingend sind, funktioniert die erfindungsgemäße Mehrraumgebäude-Lüftungsanlage wie folgt:
Als Beispiel sei hier ein Gebäude mit einem Schlafzimmer und einem Badezimmer genannt, wobei das Schlafzimmer als ein mit Zuluft versorgt ausgebildeter Raum 4 und das Badezimmer als von Abluft befreit ausgebildeter Raum 5 zu betrachten ist. Zwischen den beiden Zimmern ist ein Flur angeordnet, welcher als Verbindungsraum 6 dient. Es ergibt sich nun die Situation, dass das Schlafzimmer zu einem bestimmten Zeitpunkt nicht genutzt wird und daher nur eine geringe Zufuhr von Zuluft benötigt. Dies wird dadurch gewährleistet, dass das Zuluftventil 10 zwischen dem mit Zuluft versorgt ausgebildeten Raum 4 (hier: Schlafzimmer) und dem Lüftungsgerät 1 zumindest teilweise geschlossen wird. Gleichzeitig wird aber im Badezimmer eine hohe Abfuhr von Abluft benötigt, da gerade eine Person darin gebadet hat. Ein in dem von Abluft befreit ausgebildeten Raum 5 (hier: Badezimmer) angeordneter Feuchtigkeitssensor detektiert also eine erhöhte Luftfeuchtigkeit im Badezimmer und stellt den zuvor erwähnten erhöhten Bedarf nach Abfuhr der Abluft fest, wodurch das Abluftventil 11, das dem Badezimmer nachgeschaltet ist, weiter geöffnet wird. Da nun aber dem Schlafzimmer wenig Luft zu-, dafür aber dem Badezimmer viel Luft abgeführt wird, entsteht ein Druckunterschied im Gebäude. Dieser wird nun kompensiert, indem dem Gebäude über den Ausgleichsanschluss 7 und den Wärmespeicher 8 im Flur, der als Verbindungsraum 6 das Schlaf- mit dem Badezimmer verbindet, weitere Zuluft zugeführt wird. Dabei wird diese Zuluft durch Aufnahme von zuvor im Wärmespeicher 8 gespeicherter Wärme vorgewärmt, wodurch sich im Gebäude befindliche Personen keinem unangenehm temperierten Luftzug ausgesetzt sehen. Dies erhöht den Komfort dieser Personen, zusätzlich zur Kompensation des Druckunterschiedes, erheblich.

Sollte umgekehrt die Luftzufuhr im Gebäude höher sein als die Luftabfuhr, so entsteht ebenfalls ein Druckunterschied, der nun aber durch Abfuhr von Luft aus dem Gebäude durch den Wärmespeicher 8 und den Ausgleichsanschluss 7 kompensiert wird. Dabei wird der Abluft Wärme entzogen, die im Wärmespeicher zur späteren Verwendung (siehe oben) gespeichert wird. Dies gewährleistet, dass die Wärme aus dem Innern des Gebäudes nicht einfach in die Umgebung entweicht und verbessert somit die Energiebilanz der Mehrraumgebäude-Lüftungsanlage.

### Bezugszeichenliste

- 1: Lüftungsgerät
- 2: Luftzufuhranschluss
- 3: Luftabfuhranschluss
- 4: mit Zuluft versorgt ausgebildeter Raum
- 5: von Abluft befreit ausgebildeter Raum
- 6: Verbindungsraum
- 6.1: Verbindungsraum-Zufuhranschluss
- 6.2: Verbindungsraum-Abfuhranschluss
- 6.3: Verbindungsraum-Ausgleichsanschluss
- 7: Ausgleichsanschluss
- 8: Wärmespeicher
- 9: Drucksensor
- 10: Zuluftventil
- 11: Abluftventil
- 12: Zuluftanschluss
- 13: Abluftanschluss

## Patentansprüche

1. Mehrraumgebäude-Lüftungsanlage, umfassend ein mehrräumiges Gebäude und ein in diesem angeordnetes, zentrales Lüftungsgerät (1), das mit einer Umgebung des Gebäudes verbundene Luftzu- und Luftabfuhranschlüsse (2, 3) aufweist, wobei im Gebäude mindestens ein vom Lüftungsgerät (1) mit Zuluft versorgt ausgebildeter Raum (4) und mindestens ein vom Lüftungsgerät (1) von Abluft befreit ausgebildeter Raum (5) vorgesehen ist,
**dadurch gekennzeichnet,**
**dass** zwischen den Räumen (4, 5) ein Verbindungsraum (6), im Verbindungsraum (6) ein von den Luftzu- und Luftabfuhranschlüssen (2, 3) unabhängiger, mit der Umgebung des Gebäudes verbundener Ausgleichsanschluss (7) und ein einerseits mit dem Verbindungsraum (6) und andererseits mit dem Ausgleichsanschluss (7) verbundener Wärmespeicher (8) vorgesehen ist.

2. Mehrraumgebäude-Lüftungsanlage nach Anspruch 1,
**dadurch gekennzeichnet,**
**dass** der Verbindungsraum (6) einen gemeinsamen Verbindungsraum-Zufuhranschluss (6.1) zur Verbindung mit den mit Zuluft versorgten Räumen (4), einen gemeinsamen Verbindungsraum-Abfuhranschluss (6.2) zur Verbindung mit den von Abluft befreiten Räumen (5) und einen Verbindungsraum-Ausgleichsanschluss (6.3) zur Verbindung mit dem Wärmespeicher (8) aufweist.

3. Mehrraumgebäude-Lüftungsanlage nach Anspruch 1 oder 2,
**dadurch gekennzeichnet,**
**dass** im Wärmespeicher (8) ein Phasenwechselmaterial zur Speicherung von Wärme vorgesehen ist.

4. Mehrraumgebäude-Lüftungsanlage nach einem der Ansprüche 1 bis 3,
**dadurch gekennzeichnet,**
**dass** den Räumen (4, 5, 6) zur Ermittlung einer sich von einer Zuluftöffnung zu einer Abluftöffnung einstellenden Druckdifferenz Drucksensoren (9) zugeordnet sind.

5. Mehrraumgebäude-Lüftungsanlage nach einem der Ansprüche 1 bis 4,
**dadurch gekennzeichnet,**
**dass** dem mit Zuluft versorgt ausgebildeten Raum (4) ein Zuluftventil (10) vorgeschaltet ist.

6. Mehrraumgebäude-Lüftungsanlage nach einem der Ansprüche 1 bis 5,
**dadurch gekennzeichnet,**
**dass** dem von Abluft befreit ausgebildeten Raum (5) ein Abluftventil (11) nachgeschaltet ist.

7. Verfahren zum Betrieb einer Mehrraumgebäude-Lüftungsanlage nach Anspruch 1,
**dadurch gekennzeichnet,**
**dass** wahlweise bei einer Luftabfuhr über den Ausgleichsanschluss (7) gegebenenfalls in der Abfuhrluft enthaltene Wärme an den Wärmespeicher (8) oder bei einer Luftzufuhr über den Ausgleichsanschluss (7) gegebenenfalls im Wärmespeicher (8) gespeicherte Wärme an die Zufuhrluft übertragen wird.

8. Verfahren zum Betrieb einer Mehrraumgebäude-Lüftungsanlage nach den Ansprüchen 1, 4, 5 und 6,
**dadurch gekennzeichnet,**
**dass** mit Hilfe von in den Räumen (4, 5, 6) angeordneten Drucksensoren (9) und mit Hilfe von den Räumen (4, 5) zugeordneten Zuluft- und Abluftventilen (10, 11) konstante Differenzdrücke in den Räumen (4, 5, 6) eingeregelt werden.

9. Verfahren zum Betrieb einer Mehrraumgebäude-Lüftungsanlage nach den Ansprüchen 1, 5 und 6,
**dadurch gekennzeichnet,**
**dass** wahlweise mit Hilfe von Kohlendioxidsensoren und/oder Feuchtigkeitssensoren in den Räumen (4, 5, 6) ein Belüftungsbedarf ermittelt und dessen Befriedigung mit Hilfe einer bedarfsangepassten Einstellung der Zuluft- (10) und Abluftventile (11) geschaffen wird.

10. Verfahren zum Betrieb einer Mehrraumgebäude-Lüftungsanlage nach den Ansprüchen 1, 5 und 6,
**dadurch gekennzeichnet,**
**dass** eine Einstellung der Zuluft- (10) und Abluftventile (11) bedarfsorientiert am Zustand des Wärmespeichers (8) erfolgt, wobei der Zustand des Wärmespeichers (8) mit Hilfe geeigneter Sensoren ermittelt wird.

## Claims

1. A multiroom building ventilation system, comprising a multiroom building and a central ventilation device (1) arranged therein, which has air supply and air exhaust connections (2, 3) connected with an environment of the building, wherein at least one room (4) designed to be supplied with supply air by the ventilation device (1) and at least one room (5) designed to be cleared of exhaust air by the ventilation device (1) are provided in the building,
**characterized in that**
a connecting room (6) between the rooms (4, 5), an equalizing connection (7) independent of the air supply and air exhaust connections (2, 3) and connected with the environment of the building in the connecting room (6), and a heat accumulator (8) connected with the connecting room (6) on the one hand and with the equalizing connection (7) on the other are provided.

2. The multiroom building ventilation system according to claim 1,
**characterized in that**
the connecting room (6) has a shared connecting room supply connection (6.1) to be connected with the rooms (4) supplied with supply air, a shared connecting room exhaust connection (6.2) to be connected with the rooms (5) cleared of exhaust air, and a connecting room equalizing connection (6.3) to be connected with the heat accumulator (8).

3. The multiroom building ventilation system according to claim 1 or 2,
**characterized in that**
a phase change material is provided in the heat accumulator (8) for storing heat.

4. The multiroom building ventilation system according to one of claims 1 to 3,
**characterized in that**
the rooms (4, 5, 6) have allocated to them pressure sensors (9) for determining a pressure difference that arises from a supply air opening to an exhaust air opening.

5. The multiroom building ventilation system according to one of claims 1 to 4,
**characterized in that**
a supply air valve (10) is placed upstream from the room (4) designed to be supplied with supply air.

6. The multiroom building ventilation system according to one of claims 1 to 5,
**characterized in that**
an exhaust valve (11) is placed downstream from the room (5) designed to be cleared of exhaust air.

7. A method for operating a multiroom building ventilation system according to claim 1,
**characterized in that**
optionally any heat potentially contained in the exhaust air is transferred to the heat accumulator (8) when removing air via the equalizing connection (7), or any heat potentially stored in the heat accumulator (8) is transferred to the supply air when supplying air via the equalizing connection (7).

8. The method for operating a multiroom building ventilation system according to claims 1, 4, 5 and 6,
**characterized in that**
constant pressure differences in the rooms (4, 5, 6) are adjusted with the help of the pressure sensors (9) arranged in the rooms (4, 5, 6) and with the help of the supply air and exhaust air valves (10, 11) allocated to the rooms (4, 5).

9. The method for operating a multiroom building ventilation system according to claims 1, 5 and 6,
**characterized in that**
carbon dioxide sensors and/or moisture sensors in the rooms (4, 5, 6) are optionally used to determine a ventilation demand, and that the latter is satisfied with the help of a needs-based adjustment of the supply air (10) and exhaust air valves (11).

10. The method for operating a multiroom building ventilation system according to claims 1, 5 and 6,
**characterized in that**
a needs-oriented adjustment of the supply air (10) and exhaust air valves (11) to the state of the heat accumulator (8) takes place, wherein the state of the heat accumulator (8) is determined with the help of suitable sensors.

## Revendications

1. Installation de ventilation d'un bâtiment de plusieurs pièces, comprenant un bâtiment de plusieurs pièces et un appareil de ventilation (1) central disposé dans celui-ci, qui comporte des raccordements d'arrivée d'air et d'évacuation d'air (2, 3) reliés à un environnement du bâtiment, sachant que dans le bâtiment est prévu au moins un espace (4) constitué alimenté en air d'arrivée par l'appareil de ventilation (1) et au moins un espace (5) constitué libéré d'air d'évacuation par l'appareil de ventilation (1),
**caractérisée en ce qu'**
entre les espaces (4, 5), il est prévu un espace de liaison (6), dans l'espace de liaison (6) un raccordement d'équilibrage (7) indépendant des raccordements d'arrivée d'air et d'évacuation d'air (2, 3), relié à l'environnement du bâtiment et un accumulateur de chaleur (8) relié d'une part à l'espace de liaison (6) et d'autre part au raccordement d'équilibrage (7).

2. Installation de ventilation d'un bâtiment de plusieurs pièces selon la revendication 1,
**caractérisée en ce que**
l'espace de liaison (6) comporte un raccordement d'arrivée d'espace de liaison (6.1) commun pour la liaison avec les espaces (4) alimentés en air d'arrivée, un raccordement d'évacuation d'espace de liaison (6.2) commun pour la liaison avec les espaces (5) libérés d'air d'évacuation et un raccordement d'équilibrage d'espace de liaison (6.3) pour la liaison avec l'accumulateur de chaleur (8).

3. Installation de ventilation d'un bâtiment de plusieurs pièces selon la revendication 1 ou 2,
**caractérisée en ce qu'**
un matériau de changement de phase est prévu dans l'accumulateur de chaleur (8) pour le stockage de chaleur.

4. Installation de ventilation d'un bâtiment de plusieurs pièces selon l'une quelconque des revendications 1 à 3,
**caractérisée en ce que**
des capteurs de pression (9) sont attribués aux espaces (4, 5, 6) pour déterminer une différence de pression s'établissant d'une ouverture d'arrivée d'air à une ouverture d'évacuation d'air.

5. Installation de ventilation d'un bâtiment de plusieurs pièces selon l'une quelconque des revendication 1 à 4,
**caractérisée en ce qu'**
une soupape d'arrivée d'air (10) est montée en amont de l'espace (4) constitué alimenté en air d'arrivée.

6. Installation de ventilation d'un bâtiment de plusieurs pièces selon l'une quelconque des revendications 1 à 5,
**caractérisée en ce que**
une soupape d'évacuation d'air (11) est montée en aval de l'espace (5) constitué libéré d'air d'évacuation.

7. Procédé de fonctionnement d'une installation de ventilation d'un bâtiment de plusieurs pièces selon la revendication 1,
**caractérisé en ce que**
la chaleur contenue le cas échéant dans l'air d'évacuation est transmise facultativement lors d'une évacuation d'air par le raccordement d'équilibrage (7) à l'accumulateur de chaleur (8) ou la chaleur stockée le cas échéant dans l'accumulateur de chaleur (8) est transmise à l'air d'arrivée par le raccordement d'équilibrage (7) lors d'une arrivée d'air.

8. Procédé de fonctionnement d'une installation de ventilation d'un bâtiment de plusieurs pièces selon les revendications 1, 4, 5 et 6,
**caractérisé en ce que**
les pressions différentielles constantes dans les espaces (4, 5, 6) sont régulées à l'aide des capteurs de pression (9) disposés dans les espaces (4, 5, 6) et à l'aide des soupapes d'arrivée d'air et d'évacuation d'air (10, 11) attribuées aux espaces (4, 5).

9. Procédé de fonctionnement d'une installation de ventilation d'un bâtiment de plusieurs pièces selon les revendications 1, 5 et 6,
**caractérisé en ce qu'**
un besoin de ventilation est déterminé facultativement à l'aide de capteurs de dioxyde de carbone et/ou de capteurs d'humidité dans les espaces (4, 5, 6) et il est satisfait à ce besoin à l'aide d'un réglage adapté au besoin des soupapes d'arrivée d'air (10) et des soupapes d'évacuation d'air (11).

10. Procédé de fonctionnement d'une installation de ventilation d'un bâtiment de plusieurs pièces selon les revendications 1, 5 et 6,
**caractérisé en ce qu'**
un réglage des soupapes d'arrivée d'air (10) et d'évacuation d'air (11) a lieu selon besoin sur l'état de l'accumulateur de chaleur (8), sachant que l'état de l'accumulateur de chaleur (8) est déterminé à l'aide de capteurs appropriés.
